# EUROPEAN PATENT APPLICATION

(11) **EP 4 696 394 A1**
(43) Date of publication of application: **18.02.2026**
(21) Application number: 25186723.0
(22) Date of filing: 01.07.2025
(51) Int. Cl.: B01D 46/00, B01D 46/10, B01D 46/52

(54) **BENDABLE FILTER**

(30) Priority: 12.08.2024 CH 8442024
(71) Applicant: Zehnder Group International AG, 5722 Gränichen (CH)
(72) Inventor: Zanetti, Luca, 22010 Alserio (Como) (IT)
(74) Representative: Rentsch Partner AG

(57) **Abstract**

The disclosure relates to a filter (1) extending in a resting state (2) along a filter plane and comprising a front end (11), a rear end (12) and a filter element (13) extending in a longitudinal direction between the front end (11) and the rear end (12). The filter (1) is reversibly bendable from the resting state (2) to an insertion state (3) in which the filter (1) is bent along a bending axis (4) essentially parallel to the filter plane. The filter (1) has a bending stiffness urging the filter (1) from the insertion state (3) back to the resting state (2). Further disclosed is a filter assembly (6) comprising a filter (1) and a filter housing (7).

## Description

### FIELD OF THE INVENTION

The present invention relates to a filter and a filter assembly according to the preamble of the independent patent claims.

### BACKGROUND OF THE INVENTION

Air filters are constructed for use in air handling and filtration devices, such as heating and cooling equipment for living or work spaces, or in other settings such as air handling equipment used for cooling electronic equipment. Typically, such heating-ventilation and air-conditioning (HVAC) systems include a disposable filter and a filter frame or filter housing holding the filter. Periodic cleaning or replacement of the filter is necessary to achieve proper and efficient airflow, to ensure sufficient air quality, and to provide proper care and maintenance of the components of such air handling systems.

Several filter systems are known in which the filter may be replaced by first retracting the used filter from the filter frame and then placing a new filter in the filter frame. However, in the known filter systems, this replacement is complicated, time-consuming and requires several manual operations, including complex ones. For example, in many known filter systems, the frame has an opening door that may be secured by some sort of lock mechanism, such as a snap or a clip. In such systems, replacement involves first unlocking the locking mechanism, followed by clearing the opening (which may involve swinging open a closure door about a hinge), pulling the used filter out of the housing with one hand while holding the closure door in place, inserting a new filter into the housing, closing the closure door, and finally securing the locking mechanism. Performing these operations is time-consuming. Furthermore, the structural elements involved in the replacement (such as the closure door, the locking mechanism and the hinge) are prone to damage, particularly during the replacement operation. Once damaged, the filter system may require repair of the supplementary structural elements involved in the replacement before the filter system can be used again.

A further problem with the filter systems known from the prior art is that even if they provide for a relatively simple replacement mechanism, they suffer from poor stability of the filter in the filter housing. For example, in some known filter systems, the filter frame includes large openings that allow facile replacement of used filters. However, in many of these systems, the filter is not held firmly within the filter housing and the filter has a considerable range of movement in the filter housing. Thus, the filter may suffer from uncontrolled displacement of the filter relative to the filter housing, which jeopardizes the efficiency of the airflow and the resulting filtering efficiency and air quality. This is particular problem in settings involving strong airflows.

Finally, many of the known filters are rather rigid in order to provide sufficient stability with respect to the airflow. However, the rigidity also makes the filters highly specific to certain frame sizes and shapes. For example, rigid filters sized for a certain frame may no longer be usable if the frame has a slightly different geometry or shape. Furthermore, the rigidity of many known filters also makes these amendable to physical damage, e.g. during transport.

Consequently, there is a need to provide new filters and new filter assemblies.

### SUMMARY OF THE INVENTION

It is an object of the present disclosure to address at least some of the disadvantages of the prior art filters and prior art filter assemblies at least partially. In particular, it is an object of at least some embodiments to provide a filter and a filter assembly that allow for an efficient and easy replacement of the filter. In particular, it is envisioned to allow for a replacement mechanism that involves minimal and simple manual operations. Furthermore, it is an object of at least some embodiments to provide a filter and a filter assembly in which the filter is held firmly and securely, but in which the filter can also be replaced easily. Furthermore, it is an object of at least some embodiments to provide a filter and a filter assembly in which the filter is amenable to filter housings having complex geometries, contours or shapes. Furthermore, it is an object of at least some embodiments to provide a filter and a filter assembly in which the filter is amenable to filter housings of different geometries, sizes, contours or shapes.

The overall object is achieved by the subject-matter of the independent claims. Particularly advantageous embodiments are defined by the dependent claims, as well as the overall disclosure.

In a first aspect, the present disclosure relates to a filter. In a resting state, the filter extends along a filter plane and comprises a front end, a rear end and a filter element. The filter element extends in a longitudinal direction between the front end and the rear end. The filter is reversibly bendable from the resting state to an insertion state in which the filter is bent along a bending axis essentially parallel to the filter plane. The filter has a bending stiffness urging the filter from the insertion state back to the resting state.

By being bendable from the resting state to an insertion state in which the filter is bent along a bending axis essentially parallel to the filter plane, the filter may be inserted into a filter housing, e.g. as part of a filter replacement operation. Once the filter has been fully inserted, the bending stiffness of the filter may urge the filter from the insertion state back to the resting state. Thus, for example, once the filter has adopted the resting state inside the housing, the bending stiffness may allow the filter to be securely held in the filter. In particular, it is possible to insert the filter into a corresponding housing merely by bending and concomitantly inserting the filter. Once inside the housing, it may for example no longer be necessary to perform any further manual operations such as closing the opening or operating any locking structures.

Filter plane as used herein denotes the plane along which the filter extends in the resting state. In relation to a 3-dimensional coordinate system with three mutually orthogonal axes, the filter plane can, for example, refer to the two axes that define the main extension direction of the filter. For example, in typical variants, the filter plane is defined by a longitudinal direction and a transversal direction, whereby the filter has a length in the longitudinal direction, a width in the transversal direction orthogonal to the longitudinal direction and a thickness in a vertical direction orthogonal to the longitudinal direction and orthogonal to the transverse direction. Depending on the application, the filter can have different shapes. It is therefore understood that in some variants the filter plane can be perfectly planar, essentially planar or even slightly curved.

Directional indications herein are provided with respect to a longitudinal direction and with respect to a filter plane. The longitudinal direction is essentially parallel to the filter plane. The terms front and rear refer generally to the longitudinal direction. Thus, a front end and a rear end of an object (e.g. the filter) are arranged opposite each other in the longitudinal direction. Occasionally, reference is made to a vertical direction, which is orthogonal to the filter plate. Furthermore, reference is occasionally made to a transversal direction, which is orthogonal to the longitudinal direction and parallel to the filter plane. Further, reference is made to an upwind direction and a downwind direction, both of which are orthogonal to the filter plane. The upwind direction is oriented opposite to the downwind direction. Similarly, reference is made to an upwind side and a downwind side, such as an upwind side of the filter (respectively the filter housing or the filter assembly) and a downwind side of the filter (respectively the filter housing or filter assembly). The upwind side is generally oriented facing the upwind direction and the downwind side is generally oriented facing the downwind direction. Furthermore, reference is made to a length of the filter, to a width of the filter, and to a thickness of the filter. The length of the filter generally refers to a maximum extension of the filter in longitudinal direction. The width of the filter generally refers to a maximum extension of the filter in transversal direction. The thickness of the filter generally refers to a maximum extension of the filter in vertical direction. In some variants, the filter has a length that exceeds its width. Typically, the length of the filter significantly exceeds its thickness and the width of the filter significantly exceeds its thickness.

The filter can be in at least two different states, namely the resting state or the insertion state. More generally, the filter may be transformed between at least these two different states by physical deformation, which includes bending along a bending axis. In some variants, the physical deformation consists only of bending along the bending axis.

By reversibly bending the filter along a bending axis essentially parallel to the filter plane, the filter may be brought from the resting state into the insertion state. Thus, the resting state is the state that the filter adopts when essentially no bending force is applied. In the insertion state, by contrast, the filter is bent along the bending axis. It is understood that in the insertion state, the filter is bent relative to the resting state. Thus, a bending angle defining the bending along the bending axis is different in the insertion state compared to the resting state. It is understood that in the insertion state, the filter may in some variants be bent along precisely one bending axis, or the filter may in some variants be bent along one or more bending axes. For example, in the insertion state, the filter can in some variants be bent along multiple bending axes, which may for example be essentially parallel to each other. Thus, it may be said that in some variants, the filter is bent along a bending axis at multiple bending positions, wherein the bending positions may for example be spaced apart from each other in the longitudinal direction. In some variants, in the insertion state, the front end and the rear end are closer to each other than in the resting state.

In some variants, the filter is bendable at any longitudinal position within a longitudinal section comprising at least 10%, preferably at least 30%, more preferably at least 50%, even more preferably at least 70%, even more preferably at least 90%, of a length of the filter in longitudinal direction. For example, in some variants, the filter is bendable along its entire length. One advantage of these embodiments is that they allow the filter to be progressively bent along its length, which allows for a greater flexibility with respect to the openings through which the filter can be inserted into a filter housing. For example, if the filter is bendable along its entire length (or a portion thereof), a narrow opening of a filter housing may be chosen through which the filter is inserted. Any longitudinal position, as used in the context of the embodiments described in this paragraph, means that the filter can be bent along a bending axis arranged at any longitudinal position within the respective longitudinal section.

The filter is reversibly bendable from the resting state to the insertion state. Reversibly bendable, in this context, means that the filter may be brought from the resting state into the insertion state and then back into the resting state again. One such cycle may be referred to as a bending cycle. Typically, the physical characteristics of the filter are essentially unchanged after the bending cycle compared to before the bending cycle. For example, the bending stiffness of the filter may in some variants be essentially unchanged after the bending cycle compared to before the bending cycle. In some variants, reversibly bendable means that at least one physical characteristic of the filter (such as the bending stiffness of the filter, length of the filter, width of the filter, thickness of the filter, curvature of the filter, or a combination of two or more of these physical characteristics) is essentially unchanged after the filter has been subjected to at least 5, preferably at least 20, more preferably at least 100, even more preferably at least 500, such as at least 1'000, bending cycles. Essentially unchanged, in this context, may for example mean that the respective parameter defining the physical characteristic (e.g. bending stiffness) is within ±25%, such as within ±15%, particularly within ±10%, preferably within ±5%, of the respective reference value. The reference value typically refers to the respective parameter before subjecting the filter to the bending cycles.

Depending on the application, the filter may have different bending ranges within which the filter is bendable. The bending range may be quantified using different methods. For example, in one method involving a three-point-bending-test, the filter is placed on two supports interspaced horizontally by a distance corresponding to 40% of a total length in longitudinal direction of the filter in the resting state. The two supports have the same vertical position. The filter is then positioned on the two supports such that a first support has a horizontal distance from the front end of the filter of 30% of the total length in longitudinal direction of the filter, and a second support has a horizontal distance from the rear end of the filter of 30% of the total length in longitudinal direction of the filter. The filter is then bent by an upper loading applied to an opposite side of the filter. The upper loading is arranged in the horizontal direction between the two supports. The upper loading applies a bending load on the filter, which causes the filter to be bent. The test may be used e.g. to determine the bending stiffness or a range of vertical displacement within which the filter is reversibly bendable. In some variants, using this test, the filter is reversibly bendable within a vertical displacement range of at least 2%, preferably at least 5%, more preferably at least 10%, such as at least 15%, of the total length in longitudinal direction of the filter. In some variants, using this test, the filter is reversibly bendable within a vertical displacement range of from 5% to 30%, preferably from 10% to 20%, of the total length in longitudinal direction of the filter. The vertical displacement refers to a displacement of the filter in the vertical direction at the position of the upper loading. The vertical displacement may then be provided relative to the length of the filter in longitudinal direction.

In some variants, the filter is reversibly bendable up to a bending angle α of up to 80°, preferably up to 70°, more preferably up to 60°, even more preferably up to 50°. The bending angle α may for example in some variants be determined using the three-point-bending-test described above. When using this test, the bending angle α is defined as α = 180° - β, wherein β is defined as the angle between a first tangent and a second tangent, wherein the first tangent is the tangent of the filter on the first of the two supports, and the second tangent is the tangent of the filter on the second of the two supports. In some variants, the filter is reversibly bendable up to a bending angle α of up to 40°, such as up to 30°.

The filter may be reversibly bendable up to a certain bending angle α, as defined above. It is understood that before reaching the indicated bending angle and at precisely the indicated bending angle, the filter is still reversibly bendable. However, if the bending angle is exceeded beyond the indicated bending angle, the bending characteristics of the filter may in some variants change. For example, in some variants, bending beyond the indicated bending angle may lead to irreversible bending, e.g. due to physical destruction. For example, in some variants, upon reaching the bending angle α defined above, the reversibility of the bending decreases with increasing bending beyond the bending angle α. The reversibility may for example decrease due to physical destruction, such as breakage of the filter. In some variants, the filter has a maximum bending angle α(max) before break of at least 21°, preferably at least 31°, more preferably at least 41°, even more preferably at least 51°, even more preferably at least 61°, even more preferably at least 71°, such as at least 81°. In some variants, the filter has a maximum bending angle α(max) before break of 110° or less, preferably of 90° or less, such as 80° or less, e.g. 70° or less. In some variants, the filter has a maximum bending angle α(max) before break from 10° to 110°, preferably from 30° to 110°, such as from 30° to 90°.

Depending on the application, the filter may have different bending properties. In some variants, the bending stiffness of the filter increases with increasing bending of the filter out of the resting state. For example, in the insertion state, the bending stiffness with respect to further bending may e.g. be higher than in the resting state. Depending on the application, the bending stiffness may increase linearly or non-linearly. For example, in some variants, the bending stiffness of the filter increases progressively with increasing bending of the filter out of the resting state. Progressively, in this context, means that the bending stiffness increases more strongly than linearly with increasing bending of the filter out of the resting state. In some variants, the bending stiffness of the filter increases linearly with increasing bending of the filter out of the resting state. It is also possible that the filter displays essentially linear characteristics in a first bending range, and essentially non-linear characteristics in a second bending range. For example, in some variants, the bending stiffness of the filter first increases essentially linearly in a first bending range, and subsequently increases progressively in a second bending range subsequent to the first bending range, with increasing bending of the filter out of the resting state. The first bending range defines the bending of the filter from the resting state to an intermediate state towards the insertion state, and the second bending range defines the bending of the filter from the intermediate state towards the insertion state.

In some variants, the elastic modulus (E) of the filter in the resting state is higher than 0 MPa and lower than 200 MPa, preferably higher than 0 MPa and lower than 100 MPa. For example, in some variants, the elastic modulus (E) of the filter in the resting state may be described to be less than 200 MPa, such as less than 100 MPa. Alternatively or in combination, as a lower limit, the elastic modulus (E) of the filter in the resting state may in some variants be higher than 0 MPa, such as at least 1 MPa.

Depending on the application, specific ranges within these ranges can be preferred. For example, in some embodiments, the elastic modulus of the filter in the resting state is higher than 7 MPa, such as from 10 MPa to 100 MPa. These embodiments are particularly advantageous for filters to be used with the filter housings disclosed herein, in particular with filter housings whose insertion opening is arranged essentially parallel to the filter plane when the filter in the resting state is arranged in the filter cavity. In particular, a range from 10 MPa to 100 MPa allows sufficient elasticity to allow facile insertion, but still ensures a strong enough force urging the filter back from an insertion state back to the resting state, ultimately allowing the filter to be held sufficiently firmly within the filter. Specific sub-ranges may be particularly advantageous. For example, for some filter frames, it may be particularly advantageous to provide filters having an elastic modulus in the resting state from 10 MPa to 50 MPa, such as from 15 MPa to 40 MPa, e.g. from 15 MPa to 35 MPa. In other applications, however, a higher elastic modulus may be desirable to ensure a firm grip. For example, in some embodiments, the filter has an elastic modulus in the resting state from 20 MPa to 100 MPa, particularly from 30 MPa to 100 MPa, e.g. from 30 MPa to 80 MPa.

Depending on the application, the filter may be bendable on one or more of its sides. For example, the filter may e.g. be bendable on an upwind side and on a downwind side. In some variants, the filter is bendable in an upwind direction orthogonal to the filter plane and in an opposite downwind direction orthogonal to the filter plane. In some variants, at least one bending property of the filter (e.g. the bending stiffness) is essentially the same for bending in the upwind direction as it is for bending in the downwind direction. One advantage of these variants is that the filter may e.g. be insertable in two different ways, which further facilitates the replacement operation.

The filter has a front end, a rear end and a filter element. The front end defines a front of the filter in longitudinal direction and the rear end defines a rear of the filter in the longitudinal direction. Thus, the front end and the rear end are arranged in longitudinal direction opposite each other.

In some variants, the filter further comprises two or more circumferential rim plates including a first lateral rim plate and a second lateral rim plate each extending on opposite sides of the filter element from the rear end to the front end. In other words, the first lateral rim plate extends from the rear end to the front end and the second lateral rim plate extends from the rear end to the front end, wherein the first and second lateral rim plates extend from the rear end to the front end on opposite sides of the filter element. In some variants, the first lateral rim plate and the second lateral rim plate have rim height orthogonal to the filter plane of at least 3 mm, preferably at least 8 mm, more preferably at least 12 mm. In some variants, the first lateral rim plate and the second lateral rim plate have rim height orthogonal to the filter plane of up to 50 mm, e.g. from 5 mm to 50 mm.

Depending on the application, the first lateral rim plate and the second lateral rim plate may have different shapes and geometries. In some variants, the first lateral rim plate and the second lateral rim plate each have an upwind edge that follows an essentially straight line. Optionally, the essentially straight line followed by the upwind edge of the first lateral rim plate may in some variants be essentially parallel to the essentially straight line followed by the upwind edge of the second lateral rim plate. Alternatively or in combination, in some variants, the first lateral rim plate and the second lateral rim plate each have a downwind edge that follows an essentially straight line. Optionally, the essentially straight line followed by the downwind edge of the first lateral rim plate may in some variants be essentially parallel to the essentially straight line followed by the downwind edge of the second lateral rim plate. In some variants, the essentially straight line followed by the downwind edge of the first lateral rim plate may in some variants be essentially parallel to essentially straight line followed by the upwind edge of the first lateral rim plate. Alternatively or in combination, the essentially straight line followed by the downwind edge of the second lateral rim plate may in some variants be essentially parallel to essentially straight line followed by the upwind edge of the second lateral rim plate. It is understood that the upwind edge of the first lateral rim plate is opposite the downwind edge of the first lateral rim plate. Similarly, it is understood that the upwind edge of the second lateral rim plate is opposite the downwind edge of the second lateral rim plate.

In some variants, the first lateral rim plate and the second lateral rim plate each comprise an upwind edge and an opposite downwind edge which are free of indentations having an indentation depth of more than 60%, particularly more than 50%, more particularly more than 30%, such as more than 10%, with respect to a plate height defining a distance between the upwind edge and the respective opposite downwind edge. These indentations of which the upwind edges and the opposite downwind edges may e.g. be free of may for example comprise notches, such as wedge-shaped notches.

The circumferential rim plates of the filter define a circumferential dimension of the filter. The filter may for example in some variants further include a front rim plate defining the front end and a rear rim plate defining a rear end. In some variants, the front rim plate, the first lateral rim plate, the rear rime plate and the second lateral rim plate encompass the filter element circumferentially. Typically, the front rim plate, the first lateral rim plate, the rear rime plate and the second lateral rim plate define a circumference of the filter. Depending on the application, the front rim plate and the rear rim plate may have different shapes and geometries. In some variants, the front rim plate and the rear rim plate have essentially the same rim height as the first lateral rim plate and the second lateral rim plate.

Depending on the application, the circumferential rim plates may have different shapes and geometries. For example, in some variants, each circumferential rim plate extends essentially orthogonally to the filter plane. In some variants, each circumferential rim plate is made of a through-going material. In some variants, each circumferential rim plate is made of a band material. For example, all circumferential rim plates may in some variants be made of a band material, such as a single band material. In some variants, a soft band material is chosen in order to enhance sealing between the filter and the filter housing. In some variants, the circumferential rim plates are made of a band material having a band thickness from 0.5 mm to 10 mm, preferably from 0.5 mm to 7 mm, such as from 3 mm to 6 mm. The band thickness may optionally be determined according to DIN EN ISO 9073-2 (1997-02).

Depending on the application, the circumferential rim plates may have different properties and may be made of different materials. In some variants, each circumferential rim plate has low static friction. For example, each circumferential rim plate may e.g. have a low static friction with respect to a plastic surface or with respect to a metal surface. For example, in some variants, the static friction coefficient of each circumferential rim plate against steel is 0.75 or less, preferably 0.60 or less, more preferably from 0.10 to 0.55, even more preferably from 0.15 to 0.50, even more preferably from 0.15 to 0.45.

In some variants, at least one circumferential rim plate is made of polyester. Preferably, at least the first lateral rim plate and the second lateral rim plate are each made of polyester. In some variants, all circumferential rim plates are made of polyester. In some variants, the circumferential rim plates are integrally formed. In some variants, the circumferential rim plates are materially bonded to each other, e.g. through an adhesive.

Depending on the application, the physical properties of the filter with respect to stretching or compressibility (e.g. in the longitudinal direction) may be chosen accordingly. For example, in some variants, the filter is essentially non-stretchable in longitudinal direction. In this context, non-stretchable may for example mean that the filter cannot be stretched in longitudinal direction by more than 20%, preferably more than 10%, such as more than 5%, e.g. more than 3%, of the length of the filter in longitudinal direction without break or other permanent physical damage to the filter. In some variants, the filter is essentially non-stretchable in any direction parallel to the filter plane.

In some variants, the filter is essentially incompressible in longitudinal direction In this context, incompressible may for example mean that the filter cannot be compressed in longitudinal direction by more than 20%, preferably more than 10%, such as more than 5%, e.g. more than 3%, of the length of the filter in longitudinal direction without break or other permanent physical damage to the filter. In some variants, the filter is essentially incompressible in any direction parallel to the filter plane. The variants described with respect to compressibility at this paragraph may apply independently of (i.e. additionally to or alternatively to) the embodiments described with respect to stretchability in the previous paragraph.

Depending on the application, different filter elements may be used. In some variants, the filter element is made of a pleated material, preferably comprising a plurality of pleat edges each extending essentially orthogonally to the longitudinal direction. In some variants, the filter element comprises a plurality of upwind pleat edges defining an upwind face of the filter element and a plurality of downwind pleat edges defining a downwind face of the filter element, wherein the upwind pleat edges and the downwind pleat edges preferably each extend essentially orthogonally to the longitudinal direction. In some variants, in a cross-section along the longitudinal direction and orthogonal to the filter plane, the upwind pleat edges do not extend beyond the upwind edges of the first and second lateral rim plates, and the downwind pleat edges do not extend beyond the downwind edges of the first and second lateral rim plates.

In some variants, the filter comprises a retraction handle, preferably arranged on or interconnected to the rear end of the filter. For example, the retraction handle may be directly connected to the rear end of the filter. In some variants, the retraction handle is arranged such that by pulling the retraction handle, the filter may be bent along a bending axis essentially parallel to the filter plane.

In some variants, the retraction handle is collapsible from an expanded retraction state to a collapsed operation state. For example, in some variants, in the collapsed operation state the retraction handle does not extend beyond the upwind face in the upwind direction and does not extend beyond the downwind face in the downwind direction. For example, in some variants, in the collapsed state the retraction handle is essentially flush with the upwind face or with the downwind face of the filter.

In a second aspect, the present disclosure relates to a filter assembly. The filter assembly comprises a filter according to any one of the embodiments described herein. The filter assembly further comprise a filter housing. The filter housing defines an insertion opening through which the filter in the insertion state can be inserted into the filter housing along a non-linear insertion path. The filter housing further defines a housing cavity for receiving and holding the filter in the resting state.

The present disclosure (hereinbefore and hereinafter) is discussed in the context of different aspects and embodiments to facilitate understanding of the disclosure. However, the present disclosure is to be understood as a unified disclosure. In particular, although some embodiments are discussed in the context of a particular aspect, they are nevertheless to be understood generally as embodiments of the present disclosure and, as such, generally also extend to and apply to other aspects of the present disclosure, unless it is clearly specified otherwise or unless the context dictates otherwise. For example, embodiments discussed in the context of the filter of the first aspect are also embodiments of the filter assembly of the second aspect. This is in particular the case because the filter assembly of the second aspect includes a filter according to any of the embodiments of the filter of the first aspect.

It is understood that the filter assembly is configured such that the filter can be inserted into the filter housing in the insertion state, and that the filter can adopt the resting state once inside the filter housing. Thus, in typical embodiments, the filter needs to be bent to be inserted into the filter housing. It is further understood that the insertion opening and the filter must be configured such that after insertion of the filter through the insertion opening, the filter may adopt the resting state and may still be functional respectively intact. For example, it is understood that insertion of the filter through the insertion opening should not lead to physical destruction of the filter, e.g. through irreversible breaking of the filter into two or more separate pieces.

The filter housing defines an insertion opening through which the filter in the insertion state can be inserted into the filter housing along a non-linear insertion path. Thus, the insertion opening is configured such that the filter in the insertion state can be inserted into the filter housing through the housing opening along the non-linear insertion path. Typically, the non-linear insertion path is at least partially curved. For example, in some variants, the non-linear insertion path includes at least one curve, such as exactly one curve. In some variants, the curved insertion path includes a first essentially straight section, a second essentially straight section having a different gradient to the first straight section, and a curved intermediate section interconnecting the first essentially straight section and the second essentially straight section. For example, it may be said that the first essentially straight section transitions through the curved intermediate section into the second essentially straight section. In some variants, the curved intermediate section may be an arch segment of an oval, preferably an arch segment of an ellipse.

In some variants, the first essentially straight section and the second essentially straight section may define an insertion angle δ of less than 80°, preferably less than 70°, even more preferably less than 60°, even more preferably less than 50°. In some variants, the insertion angle δ is less than 40°. In some variants, the insertion angle δ is at least 3°, such as at least 5°, preferably at least 10°, more preferably at least 15°, even more preferably at least 20°, such as at least 30°. In some variants, the insertion angle δ is from 3° to 80°, preferably from 5° to 70°, more preferably from 10° to 50°, more preferably from 10° to 40°, even more preferably from 15° to 30°.

The housing cavity is configured for receiving and holding the filter, specifically for receiving and holding the filter in the resting state. It is understood that the filter is received and held inside the filter housing. Depending on the application, the housing cavity may hold the filter in different ways. For example, in some variants, the housing cavity is configured to receive and hold the filter frictionally. Alternatively or in combination, in some variants, housing cavity is configured to receive and hold the filter in a form-fit fashion. For example, in some variants, when the filter is arranged in the housing cavity, the filter cannot be retracted from the housing cavity merely by a linear translatory displacement of the filter with respect to the filter housing, without concomitant bending of the filter. It is understood that in the embodiments described in this paragraph, the filter is being received and held in the housing cavity in its resting state.

In some variants, when the filter in the resting state is arranged in the filter cavity, translatory displacement of the filter with respect to the filter housing in any direction parallel to the filter plane is essentially blocked. In particular, in some variants, displacement of the filter in the resting state with respect to the filter housing is essentially blocked in the absence of any concomitant bending of the filter along a bending plane parallel to the filter plane. In some variants, when the filter in the resting state is arranged in the filter cavity, linear translatory displacement of the filter with respect to the filter housing is essentially blocked in any direction.

Typically, to retract the filter from the filter housing, the filter must first be at least partially bent before the filter can be retracted from the filter housing. In some variants, when the filter in the resting state is arranged in the filter cavity, a tensile force of at least 0.1 N, preferably at least 0.3 N, more preferably at least 0.5 N, is required to retract the filter from the filter housing through the insertion opening. The force required for this may for example be labelled as retraction tensile force. In some variants, when the filter in the resting state is arranged in the filter cavity, a tensile force from 0.1 N to 100 N, preferably from 0.3 N to 50 N, more preferably from 0.5 N to 30 N, even more preferably from 0.5 N to 10 N, is required to retract the filter from the filter housing through the insertion opening. In some variants, when the filter in the resting state is arranged in the filter cavity, the tensile force required to retract the filter from the filter housing through the insertion opening has at least a vector component that is orthogonal to the filter plane. In some variants, said vector component being orthogonal to the filter plane makes up at least 10%, preferably at least 30%, more preferably at least 50%, even more preferably at least 75%, of the sum of all vector components of the tensile force.

Depending on the application, the insertion housing may be arranged at different positions of the filter housing. In some variants, when the filter in the resting state is arranged in the filter cavity, the insertion opening defines an opening plane, which has an angle γ with respect to the filter plane that is different from 90°. Preferably, the angle γ is less than 80°, preferably less than 70°, more preferably less than 60°, even more preferably less than 45°. In some variants, the angle γ is less than 30°, preferably less than 20°, more preferably less than 10°, even more preferably essentially 0°. It is understood that the fact that the opening plane is defined by the insertion opening does not necessarily mean that the insertion opening has to be planar itself. Rather, the insertion opening defines the opening plane. However, the insertion opening may in some variants be planar and may in other variants be essentially planar or non-planar. For example, in some variants, the insertion opening may be have a slightly curved or bent surface, but may still define an opening plane. In some variants, the opening plane is essentially planar.

In some variants, when the filter in the resting state is arranged in the filter cavity, the insertion opening is arranged essentially parallel to the filter plane. It may also be said that in these embodiments, when the filter in the resting state is arranged in the filter cavity, the opening plane defined by the insertion opening is arranged essentially parallel to the filter plane.

Depending on the application, the insertion opening may have different sizes. In some variants, the insertion opening has a maximum length in longitudinal direction of less than 70%, preferably from 5% to 50%, more preferably from 10% to 40%, even more preferably from 15% to 30%, with respect to a length of the filter in longitudinal direction in the resting state. One advantage of these embodiments is that they strike a beneficial balance between ease of insertion of the filter and secure fixation of the filter inside the filer housing. It is understood that the maximum length of the insertion opening in longitudinal direction refers to the maximum extension of the insertion opening in longitudinal direction.

In some embodiments, when the filter in the resting state is arranged in the filter cavity, a rear end of the insertion opening is arranged at or near a the rear end of the filter. For example, in some variants, when the filter in the resting state is arranged in the filter cavity, a rear end of the insertion opening is in longitudinal direction arranged within 10%, preferably within 6%, more preferably within 3%, of the rear end of the filter with respect to a length of the filter in longitudinal direction. In other words, in these variants, when the filter in the resting state is arranged in the filter cavity, a rear end of the insertion opening has in longitudinal direction a maximum distance from the rear end of the filter of no more than 10%, preferably no more than 6%, more preferably no more than 3%, of a length of the filter in longitudinal direction. In some variants, when the filter in the resting state is arranged in the filter cavity, the rear end of the insertion opening contacts the rear end of the filter. It is understood that the distance indicated in the embodiments described in this paragraph refers only to the distance in longitudinal direction. If the rear end of the insertion opening is additionally interspaced from the rear end of the filter in another direction, e.g. in the vertical direction, then the distance in the longitudinal direction relates only to the longitudinal component of the overall distance.

In some variants, when the filter in the resting state is arranged in the filter cavity, the insertion opening extends across a width of the filter in a transversal direction orthogonal to the longitudinal direction and parallel to the filter plane. For example, in some variants, when the filter in the resting state is arranged in the filter cavity, the insertion opening extends in a transversal direction orthogonal to the longitudinal direction and parallel to the filter plane from the first lateral rim plate of the filter to the second lateral rim plate of the filter. In some variants, the width of the insertion opening in transversal direction may be within 10%, preferably within 6%, more preferably within 3%, of the width of the filter in transversal direction.

Depending on the application, the filter housing may be made of different materials. For example, in some variants, the filter housing is made of plastic or metal. In some variants, the circumferential rim plates of the filter each have a low static friction with respect to an inner surface of the filter housing defining the housing cavity. For example, in some variants, the static friction coefficient of the material of which the circumferential rim plates of the filter are made against the material of which the inner surface of the filter housing is made is 0.75 or less, preferably 0.60 or less, more preferably from 0.10 to 0.55, even more preferably from 0.15 to 0.50, even more preferably from 0.15 to 0.45

In some variants, the filter housing is a filter frame.

In some variants, the filter assembly further comprises a glide guide structure for guiding insertion of the filter into the filter housing. Depending on the application, one or more different glide guide structures may be used. For example, in some variants, the glide guide structure comprises a glide entry structure for facilitating gliding insertion of the filter into the filter housing. As an example, an insertion edge of the filter that is arranged to enter into contact with the filter housing upon insertion of the filter may in some variants be rounded. For example, the insertion edge of the filter may be an edge of the front rim plate of the filter. For example, at least one edge of the front plate of the filter may in some variants be rounded. The at least one edge of the front plate of the filter may e.g. comprise an upwind edge of the front plate and/or a downwind edge of the front plate. One advantage of these embodiments is that they facilitate insertion of the filter into the filter housing.

In some variants, additionally to or alternatively to the variants previously described, the glide guide structure may further comprise a lateral glide guide structure for guiding insertion of the filter into the filter housing. As an example, the lateral glide guide structure may include one or more lateral rails and/or one or more lateral ridges. For example, in some variants, the lateral glide guide structure includes one or more ridges and one or more grooves, wherein each groove is configured for receiving one ridge in a gliding fashion. In some variants, the one or more ridges are arranged on an inner surface of the filter housing and the one or more grooves are arranged on the lateral rim plates of the filter. One advantage of the lateral glide guide structure is that it may facilitate the insertion of the filter into the filter housing. Furthermore, in some variants, the lateral glide guide structure is also configured to secure the filter inside the filter housing. For example, in some variants, the lateral glide guide structure is configured to minimize or block displacement of the filter with respect to the filter housing in a direction orthogonal to the filter plane when the filter in the resting state is arranged in the filter cavity.

In some variants, the filter assembly further comprises a positioning structure. As an example, the positioning structure may be configured to guide the filter into a desired insertion position as the filter is inserted into the filter housing. The desired insertion position relates to the positioning of the filter inside the filter housing. For example, it may be desirable that the filter is centered inside the filter housing. In some variants, the positioning structure includes a wedge-shaped element and an indentation element configured for receiving the wedge-shaped element. The wedge-shaped element may for example have a main wedge axis essentially parallel to the longitudinal direction. The main wedge axis may e.g. be defined as a longitudinal axis of symmetry of the wedge-shaped element. However, other shapes and orientations of the wedge-shaped element may also be envisioned. In some variants, the wedge-shaped element is arranged on an inner surface of the filter housing, preferably in a front section of the inner surface of the filter housing. The indentation element may for example be arranged on the front end of the filter, preferably on the front rim plate of the filter. Thus, when the filter is inserted into the filter housing, the wedge-shaped element will eventually be received by the indentation element and increasing insertion will cause the filter to adopt the desired insertion position. In particular, the wedge-shaped element being received by the indentation element may lead to centering of the filter in the filter housing.

Depending on the application, the filter assembly may comprise further components, e.g. structures that prevent insertion of the filter in an undesired orientation (poka-yoke).

In some variants, the filter assembly is configured such that the filter can be received inside the filter housing in a first orientation, but cannot be received inside the filter housing in a second orientation, in which the filter is rotated (typically by 180°) about an axis of rotation parallel to the longitudinal direction, with respect to the first orientation. Alternatively or in combination, in some variants, the filter assembly is configured such that the filter can be received inside the filter housing in a/the first orientation, but cannot be received inside the filter housing in a third orientation, in which the filter is rotated (typically by 180°) about an axis of rotation parallel to the transversal direction, with respect to the first orientation. In some variants, the filter assembly is configured such that the filter can only be received inside the filter housing in the first orientation. In some variants, the filter cannot be received inside the filter housing in the second orientation because a keying structure prevents full insertion of the filter into the filter housing in the second orientation. Alternatively or in combination, in some variants, the filter cannot be received inside the filter housing in the third orientation because a keying structure prevents full insertion of the filter into the filter housing in the third orientation.

In some variants, the filter assembly has at least one keying structure. The at least one keying structure can, for example, be configured to allow the filter to be received inside the filter housing in the first orientation, but to prevent the filter from being received inside the filter housing in the second orientation. In particular, in the second orientation, the filter is rotated (typically by 180°) about an axis of rotation parallel to the longitudinal direction, with respect to the first orientation. Alternatively or in combination, the at least one keying structure may be configured to allow the filter to be received inside the filter housing in the first orientation, but to prevent the filter from being received inside the filter housing in the third orientation. In particular, in the third orientation, the filter is rotated (typically by 180°) about an axis of rotation parallel to the transversal direction, with respect to the first orientation.

In some variants, each keying structure of the at least one keying structure comprises a key element and a lock element complementary to the key element. The lock element is configured to receive the key element. For example, the key element can be a protrusion, such as a bulge or a pin. The lock element can, for example, be a complementary hole. For example, the key element may be arranged on an inner surface of the filter housing, preferably in a front section of the inner surface of the filter housing, and the lock element may be arranged on the rear end of the filter, preferably on the rear rim plate of the filter. Conversely, it is also possible that the key element may be arranged on the rear end of the filter, preferably on the rear rim plate of the filter, and the lock element may be arranged on an inner surface of the filter housing, preferably in a front section of the inner surface of the filter housing.

In some variants, the at least one keying structure is arranged rotationally asymmetrically with respect to an axis of rotation of the filter assembly parallel to the longitudinal direction. The axis of rotation of the filter is preferably arranged centrally in a cross section orthogonal to the longitudinal direction. For example, a first keying structure may be arranged at a first position outside a central axis of the filter assembly, which central axis is parallel to the filter plane and the longitudinal direction. Preferably, no further keying structure is arranged in a second position opposite the first position with respect to the central axis of the filter assembly. The first position is in a cross-section orthogonal to the longitudinal axis arranged outside the central axis of the filter assembly. The central axis is arranged centrally in a cross section orthogonal to the longitudinal direction. The second position is arranged in a cross section orthogonal to the longitudinal axis outside the central axis and opposite the first position with respect to the central axis. Optionally, the filter assembly may comprise a further keying structure arranged at a third position outside the central axis of the filter assembly. The third position is different from the first position and from the second position. Preferably, the third position is arranged in a first half of the filter assembly, and the first position is arranged in an opposite second half of the filter assembly, wherein the first half and the second half are separated by a plane parallel to the longitudinal direction and orthogonal to the filter plane. It is understood that said plane halves the filter assembly in the first and second half.

In some variants, the at least one keying structure and the positioning structure are realized by the same structure.

Depending on the application, the filter assembly may additionally comprise a lock structure for locking the filter in the resting state in the filter housing. For example, the lock structure may be arranged at or near a rear end of the filter opening. In some variants, the filter assembly is free of any lock structures. It is understood that the lock structure is different from the lock element of the keying structure.

Depending on the application, the filter housing may take different forms. In some variants, for example, an upwind side and a downwind side of the filter housing each include multiple openings for allowing airflow through the filter assembly. In some variants, the filter housing has a scaffold-structure. In some variants, the filter housing includes at least one crossbeam on the downwind side and at least one crossbeam on the upwind side. The crossbeams on the downwind and the upwind side are configured to hold the filter inside the filter housing. In some variants, at least one of the crossbeams of the filter housing may define a front end of the filter opening. This crossbeam may for example be rounded to facilitate insertion of the filter into the filter housing.

In a further aspect, the present disclosure relates to a process of inserting a filter into a filter housing. The process includes providing a filter assembly according to any one of the embodiments disclosed herein. The process further includes inserting the filter into the filter housing.

In a further aspect, the present disclosure relates to a process of replacing a filter from a filter assembly according to any one of the embodiments disclosed herein. The process includes retracting a used filter from the filter housing to provide an empty housing cavity. The process further includes inserting a new filter into the empty housing cavity.

The step of inserting the filter into the filter housing typically includes progressively gliding the filter into the filter housing through the insertion opening along a non-linear insertion path while concomitantly at least partially bending the filter along a bending axis essentially parallel to the filter plane. Typically, during insertion of the filter into the filter housing, the filter is progressively bent at progressive longitudinal positions of the filter.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

The present disclosure may also be described by the following items:
I-1. In a first item I-1, the present disclosure provides a filter extending in a resting state along a filter plane and comprising a front end, a rear end and a filter element extending in a longitudinal direction between the front end and the rear end;
   wherein the filter (1) is reversibly bendable from the resting state (2) to an insertion state (3) in which the filter (1) is bent along a bending axis (4) essentially parallel to the filter plane;
   wherein the filter (1) has a bending stiffness urging the filter (1) from the insertion state (3) back to the resting state (2).
I-2. In a second item I-2, the present disclosure provides a filter according to item I-1, wherein the bending stiffness of the filter increases, preferably progressively, with increasing bending of the filter out of the resting state.
I-3. In a third item I-3, the present disclosure provides a filter according to any one of items I-1 to I-2, wherein the elastic modulus (E) of the filter in the resting state is higher than 0 MPa and lower than 200 MPa, preferably higher than 0 MPa and lower than 100 MPa.
I-4. In a fourth item I-4, the present disclosure provides a filter according to any one of items I-1 to I-3, wherein the filter is bendable at any longitudinal position within a longitudinal section comprising at least 10%, preferably at least 30%, more preferably at least 50%, even more preferably at least 70%, even more preferably at least 90%, of a length of the filter in longitudinal direction.
I-5. In a fifth item I-5, the present disclosure provides a filter according to any one of items I-1 to I-4, wherein the filter is bendable in an upwind direction orthogonal to the filter plane and in an opposite downwind direction orthogonal to the filter plane.
I-6. In a sixth item I-6, the present disclosure provides a filter according to any one of items I-1 to I-5, wherein the filter is reversibly bendable up to a bending angle α of up to 40°, such as up to 30°, particularly up to 20°.
I-7. In a seventh item I-7, the present disclosure provides a filter according to any one of items I-1 to I-6, wherein the filter has a maximum bending angle α(max) before break of 70° or less, preferably of 50° or less, more preferably of 40° or less.
I-8. In an eight item, the present disclosure provides a filter according to any one of items I-1 to I-7, wherein the filter further comprises two or more circumferential rim plates including a first lateral rim plate and a second lateral rim plate each extending on opposite sides of the filter element from the rear end to the front end.
I-9. In a ninth item, the present disclosure provides a filter according to item I-8, wherein each circumferential rim plate has low static friction.
I-10. In a tenth item, the present disclosure provides a filter according to any one of items I-8 and I-9, wherein each circumferential rim plate is made of polyester.
I-11. In an eleventh item, the present disclosure provides a filter according to any one of items I-8 to I-10, wherein each circumferential rim plate extends essentially orthogonally to the filter plane.
I-12. In a twelfth item, the present disclosure provides a filter according to any one of items I-8 to I-11, wherein the first lateral rim plate and the second lateral rim plate each comprise an upwind edge and an opposite downwind edge which are free of indentations having an indentation depth of more than 30%, such as more than 50%, particularly more than 60%, with respect to a plate height defining a distance between the upwind edge and the respective opposite downwind edge.
I-13. In a thirteenth item, the present disclosure provides a filter according to any one of items I-1 to I-12, wherein the filter is essentially non-stretchable in longitudinal direction and/or essentially incompressible in longitudinal direction.
I-14. In a fourteenth item, the present disclosure provide a filter according to any one of items I-1 to I-13, wherein the filter element is made of a pleated material, preferably comprising a plurality of pleat edges each extending essentially orthogonally to the longitudinal direction.
I-15. In a fifteenth item, the present disclosure provides a filter assembly comprising a filter according to any one of items I-1 to I-14 and a filter housing defining:
   a. an insertion opening through which the filter in the insertion state can be inserted into the filter housing along a non-linear insertion path; and
   b. a housing cavity for receiving and holding the filter in the resting state.
I-16. In a sixteenth item, the present disclosure provides a filter assembly according to item I-15, wherein the non-linear insertion path is at least partially curved.
I-17. In a seventeenth item, the present disclosure provides a filter assembly according to any one of items I-15 to I-16, wherein the housing cavity is configured to receive and hold the filter frictionally and/or in a form-fit fashion.
I-18. In an eighteenth item, the present disclosure provides a filter assembly according to any one of items I-15 to I-17, wherein when the filter in the resting state is arranged in the filter cavity, translatory displacement of the filter with respect to the filter housing in any direction parallel to the filter plane is essentially blocked.
I-19. In a nineteenth item, the present disclosure provides a filter assembly according to any one of items I-15 to I-18, wherein when the filter in the resting state is arranged in the filter cavity, the insertion opening is arranged essentially parallel to the filter plane.
I-20. In a twentieth item, the present disclosure provides a filter assembly according to any one of items I-15 to I-19, wherein the insertion opening has a maximum length in longitudinal direction of less than 70%, preferably from 5% to 50%, more preferably from 10% to 40%, even more preferably from 15% to 30%, with respect to a length of the filter in longitudinal direction in the resting state.
I-21. In a twenty-first item, the present disclosure provides a filter assembly according to any one of items I-15 to I-20, wherein when the filter in the resting state is arranged in the filter cavity, a rear end of the insertion opening is in longitudinal direction arranged within 10%, preferably within 6%, more preferably within 3%, of the rear end of the filter with respect to a length of the filter in longitudinal direction.
I-22. In a twenty-second item, the present disclosure provides a filter assembly according to any one of items I-15 to I-21, wherein when the filter in the resting state is arranged in the filter cavity, the insertion opening extends across a width of the filter in a transversal direction orthogonal to the longitudinal direction and parallel to the filter plane.
I-23. In a twenty-third item, the present disclosure provides a filter assembly according to any one of items I-15 to I-22, wherein the circumferential rim plates of the filter each have a low static friction with respect to an inner surface of the filter housing defining the housing cavity.
I-24. In a twenty-fourth item, the present disclosure provides a filter assembly according to any one of items I-15 to I-23, wherein when the filter in the resting state is arranged in the filter cavity, a tensile force of at least 0.1 N, preferably at least 0.3 N, more preferably at least 0.5 N, is required to retract the filter from the filter housing through the insertion opening .
I-25. In a twenty-fifth item, the present disclosure provides a filter assembly according to any one of items I-15 to I-24, further comprising a glide guide structure for guiding insertion of the filter into the filter housing.

### BRIEF DESCRIPTION OF THE DRAWINGS

The invention described herein will be more fully understood from the detailed description given herein below and the accompanying drawings, which should not be considered limiting to the invention described in the appended claims. The drawings show:
- Fig. 1: an embodiment of the filter disclosed herein in a resting state;
- Fig. 2: the embodiment of the filter illustrated in Fig. 1, but in an insertion state;
- Fig. 3: an embodiment of the filter assembly disclosed herein from two different perspective views (Fig. 3A, 3B), wherein the filter is about to be inserted into the filter housing;
- Fig. 4: the embodiment of the filter assembly illustrated in Fig. 3 from two different perspective views (Fig. 4A, 4B), but wherein the filer has been inserted into the filter housing;
- Fig. 5: an embodiment of the filter assembly disclosed herein from a side view, specifically an illustration of the insertion process including the filter in the rest state and outside the filter housing (Fig. 5A), the filter in the insertion state while being inserted into the filter housing (Fig. 5B), and the filter in the rest state after complete insertion into the filter housing (Fig. 5C);
- Fig. 6: illustrates the three-point-bending-test disclosed herein, showing the filter in a resting state (Fig. 6A) and in an insertion state (Fig. 6B) in which it is bent.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

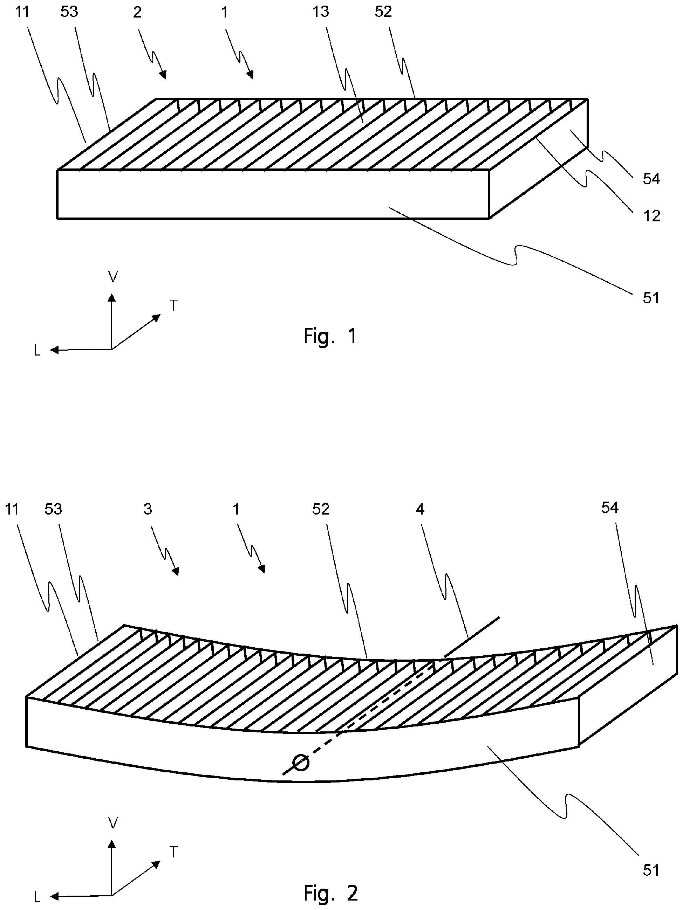

**Figures 1 and 2** show an embodiment of the filter 1 disclosed herein in a resting state (Fig. 1) and in an insertion state (Fig. 2). The filter includes a front end 11 and rear end 12 arranged in longitudinal direction opposite the front end 11. The front end 11 is defined by a front rim plate 53, and the rear end 12 is defined by a rear rim plate 54. In addition to the rim plate 53 rear rim plate 54, the filter 1 additionally includes a first lateral rim plate 51 and the second lateral rim plate 52 arranged in a transversal direction opposite the first lateral rim plate 51. The front rim plate 53, the rear rim plate 54, the first lateral rim plate 51 and the second lateral rim plate 52 circumferentially enclose a filter element 13. The filter element 13 is made of a pleated material. The pleated material does not extend beyond the circumferential rim place 51, 52, 53, 54 in the vertical direction on either side of the filter 1.

In Fig. 1, the filter 1 is shown in a resting state 2. In this state, no bending force has been applied to the filter 1 and the filter 1 extends along a filter plane defined by the longitudinal direction L and the transversal direction T. More specifically, an upwind plane defined by the upwind edges of the circumferential rim plates 51, 52, 53, 54, and a downwind plane opposite in the vertical direction and defined by the downwind edges of the circumferential rim plates 51, 52, 53, 54 each extend parallel to the longitudinal direction L and parallel to the transversal direction T.

In Fig. 2, the filter 1 is shown in an insertion state 3. In this state, a bending force has been applied to the filter 1, such that the filter is bent along a bending axis 4, which extends in the transversal direction T. The bending axis 4 is illustrated by a line and a circle. The circle does not indicate a hole in the lateral rim plate 51, but only serves to illustrate the position of the bending axis 4. In the insertion state 3, a bending stiffness of the filter 1 exerts a force urging the filter from the insertion state 3 back to the resting state 2. If the bending force that has previously been applied to the filter 1 to bring the filter into the insertion state 3 is removed, the exerted force urging the filter from the insertion state 3 back to the resting state 2 would lead to the filter returning to the resting state 2, as illustrated in Fig. 1.

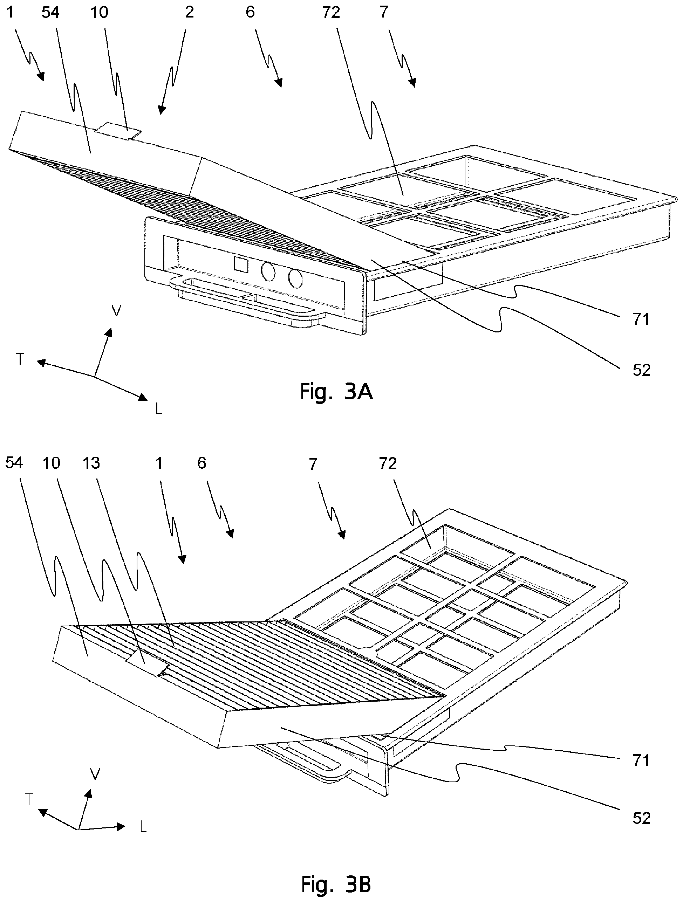

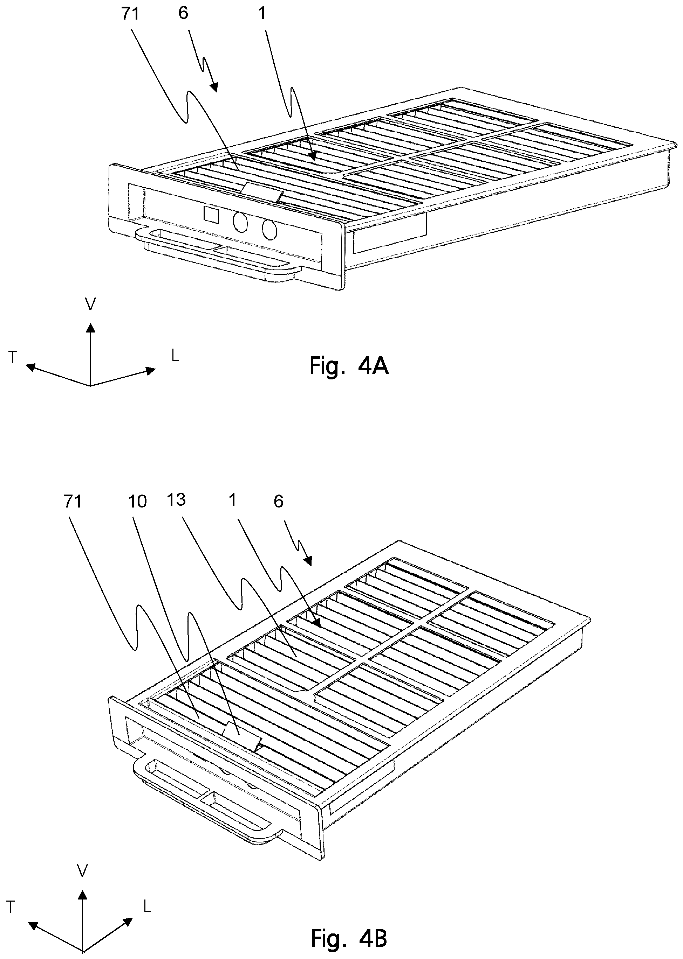

Figures 3 and 4 show an embodiment of a filter assembly 6 disclosed herein. The filter assembly 6 includes a filter 1 and a filter housing 7 for receiving and holding the filter 1. More specifically, the filter housing 7 includes an insertion opening 71 and a housing cavity 72 configured for receiving and holding the filter 1. In Fig. 3, the filter assembly 6 is shown before insertion of the filter 1 into the filter housing 7, while in Fig. 4 the filter assembly 6 is shown after insertion of the filter 1 into the filter housing 7. Figures 3 and 4 each show the respective filter assembly 6 from two different perspective views, specifically from two top perspective views. In Figs. 3 and 4, the coordination system was oriented with respect to the filter 1.

Figs. 3A and 3B illustrate how a front section of the filter 1 arranged opposite the rear rim plate 54 of the filter 1 in longitudinal direction is being inserted into the insertion opening 71 of the filter housing 7. However, no bending force has yet been applied to the filter 1, such that the filter 1 is still in the resting state 2 in which it extends essentially along the filter plane. Since the insertion of the filter housing, which is defined at least in part by the insertion opening 71 and the housing cavity 72, is non-linear, the filter 1 cannot be fully inserted into the filter housing 7 without being bent.

Thus, to insert the filter 1 into the filter housing 7, the filter 1 needs to be bent along a bending axis parallel to the transversal direction T (not shown). Subsequently, while being bent, the filter 1 can be progressively inserted through the insertion opening 71 into the filter housing 7 (not shown). As the filter 1 is progressively inserted into the filter housing 7, the bending axis progressively travels in the lateral direction in order to allow the filter 1 to be further inserted. This may also be described as the filter comprising a plurality of bending axes along which the filter 1 is bendable, wherein the plurality of bending axes each extent parallel to the transversal direction T and are interspaced from each other the longitudinal direction L.

Finally, the filter 1 has been completely inserted into the filter housing 7. Eventually, as the rear end of the filter 7 passes the rear end of the filter housing 7 in longitudinal direction, the filter 1 may snap into the housing cavity 72. This leads to the filter 1 being received by the housing cavity 72 in a form-fit fashion, as illustrated in Figs. 4A and 4B. The snapping is caused by the filter 1 being urged, as a result of its bending stiffness, from the insertion state 3 back into the resting state 2 in which the filter 1 extends essentially parallel to the filter plane once again (Figs. 4A, 4B). With the filter 1 being arranged in the housing cavity 72 and being in the resting state 2, the filter cannot be retracted from the filter housing 7 by only a linear translatory displacement of the filter 1 with respect to the filter housing 7. Rather, to remove the filter 1 from the filter housing 7 again, it would be necessary to bend the filter along a bending axis parallel to the transversal direction before being able to glide the filter 1 through the insertion opening 71 out of the filter housing 7 (not shown). For example, the retraction handle 10 may be used for retraction of the filter 1 out of the filter housing 7 again (not shown).

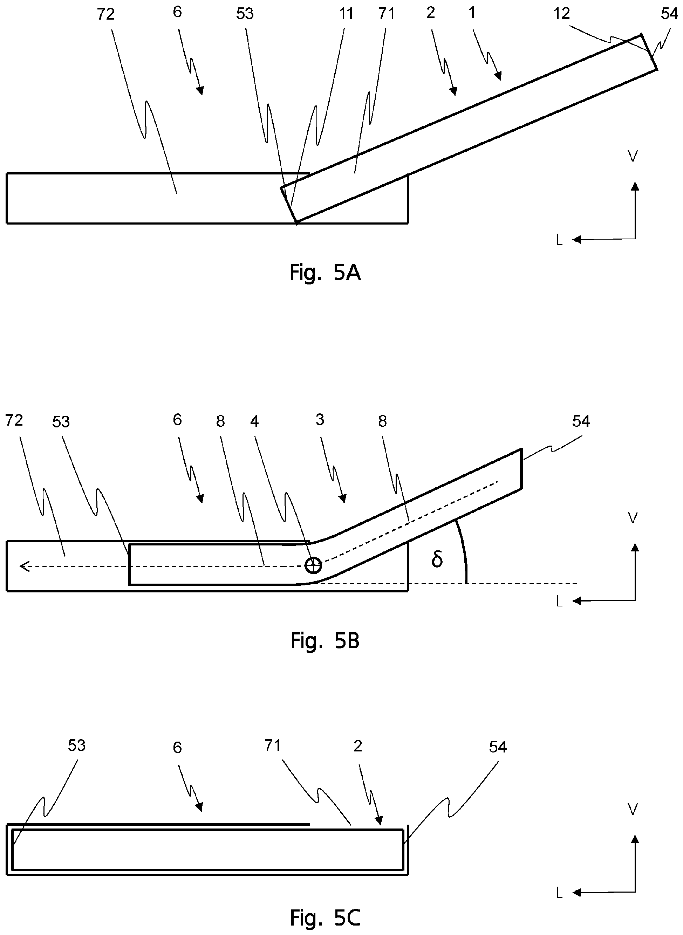

**Figure 5** illustrates a further embodiment of the filter assembly 6, which also comprises a filter 1 and a filter housing 7. More specifically, Fig. 5 illustrates the process of inserting the filter 1 into the filter housing 7 through the insertion opening 71.

In Fig. 5A, the filter 1 is still in the resting state 2 and therefore still extends essentially parallel to the filter plane. However, since the insertion opening 71 of the filter housing 7 is arranged on a downwind face of the filter housing 7, the filter housing 7 has a non-linear insertion path for the filter 1. Thus, only a proximal section of the filter 1 extending from the from rim plate 53 of the filter 1 can be inserted into the filter cavity 72 before a front end 11 of the filter contacts an inner surface of the filter housing 7. The filter 1 cannot be inserted any further without concomitant bending.

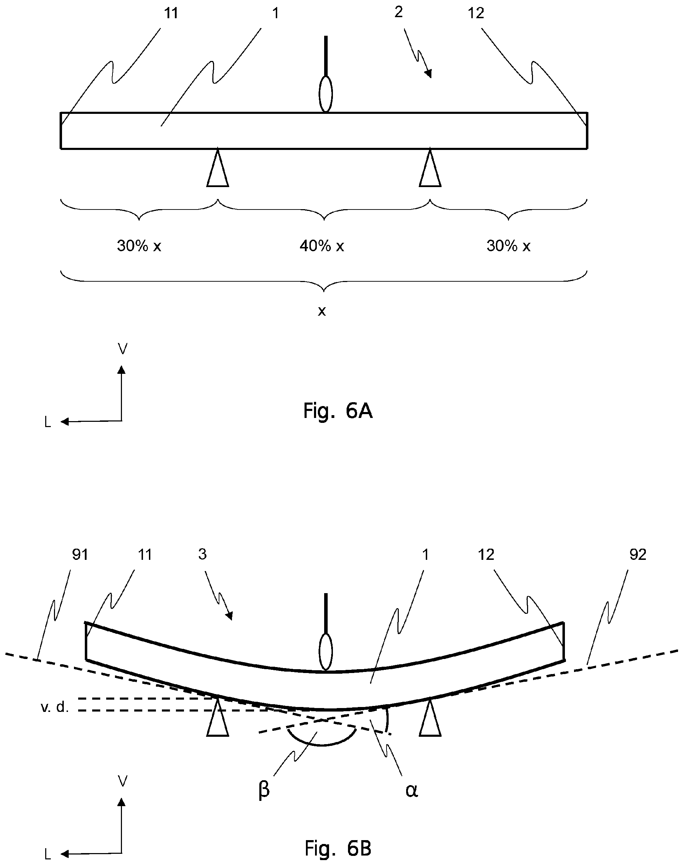

In Fig. 5B, the filter 1 has been bent along a bending axis 4 in order to allow insertion of the filter 1 into the filter housing 7. More specifically, the filter 1 is progressively inserted along the non-linear insertion path 8 through the insertion opening 71 of the filter housing 7, while being concomitantly bent along a bending axis 4 that extends parallel to the transversal direction T. During progressive insertion, the bending axis 4 progressively travels along in order to allow the filter 1 to be progressively inserted into the housing cavity 72. Fig. 6B further illustrates the insertion angle δ of the non-linear insertion path 8.

In Fig. 5C, the filter 1 has been completely inserted into the filter housing 7. As described above, the filter 1 has again adopted the resting state 2.

**Figure 6** illustrates the three-point-bending-test described herein to quantify the bending angle α. More specifically, figure 6 illustrates this test in the context of the embodiment of the filter 1 illustrated in figures 1 and 2. The filter 1 is shown in the resting state 2 (Fig. 6A) and in the insertion state 3 (Fig. 6B).

As show in Fig. 6A, the three-point-bending-test involves two supports interspaced horizontally by a distance corresponding to 40% x, where x is the length in longitudinal direction of the filter in the resting state 2. For example, if the filter 1 had a length of 100 mm, then the horizontal distance of 40% x would be 40 mm. The two supports have the same vertical position. The filter is then positioned (with its lower side, such as an upwind side) on the two supports such that a first support has a horizontal distance from the front end 11 of the filter 1 of 30% x, where x is the length in longitudinal direction of the filter 1. Similarly, a second support has a horizontal distance from the rear end 12 of the filter 1 of 30% x, where x is the length in longitudinal direction of the filter 1.

As shown in Fig. 6B, the filter 1 is then bent by an upper loading applied to an opposite (upper, such as downwind) side of the filter. The upper loading is arranged in the horizontal direction between the two supports. Thus, the upper loading is applied centrally in longitudinal direction of the filer 1. The upper loading applies a bending load on the filter 1, which causes the filter to be bent, as shown in Fig. 6B. As illustrated, the test may be used e.g. to determine a bending angle α. This bending angle α is defined as α = 180° - β, wherein β is defined as the angle between a first tangent 91 and a second tangent 92. The first tangent 91 is the tangent of the filter 1 on the first of the two supports (in Figs. 6A and 6B the left support, which is arranged towards the front end 11 of the filter 1), and the second tangent 92 is the tangent of the filter 1 on the second of the two supports (in Figs. 6A and 6B the right support, which is arranged towards the rear end 12 of the filter 1). It is understood that the tangents 91, 92 are the tangents on the side of the filter 1 that faces the two supports. Further, it is understood that the tangents usually refer to a cross-section parallel to the longitudinal and vertical direction, as illustrated in Figs. 6A and 6B. The angle between the two tangents 91 and 92 is angle β. The bending angle α may then be determined by 180° - β = α. Finally, Fig. 6B also illustrates a vertical displacement v.d. of the filter upon bending.

### LIST OF DESIGNATIONS

- 1: filter
- 11: front end of the filter
- 12: rear end of the filter
- 13: filter element
- 2: resting state of the filter
- 3: insertion state of the filter
- 4: bending axis
- 51: first lateral rim plate
- 52: second lateral rim plate
- 53: front rim plate
- 54: rear rim plate
- 6: filter assembly
- 7: filter housing
- 71: insertion opening
- 72: housing cavity
- 8: non-linear insertion path
- 91: first tangent
- 92: second tangent
- 10: retraction handle
- α: bending angle
- v. d.: vertical displacement
- L: longitudinal direction
- T V: transversal direction vertical direction

## Claims

1. Filter (1) extending in a resting state (2) along a filter plane and comprising a front end (11), a rear end (12) and a filter element (13) extending in a longitudinal direction between the front end (11) and the rear end (12);
a. wherein the filter (1) is reversibly bendable from the resting state (2) to an insertion state (3) in which the filter (1) is bent along a bending axis (4) essentially parallel to the filter plane;
b. wherein the filter (1) has a bending stiffness urging the filter (1) from the insertion state (3) back to the resting state (2).

2. Filter (1) according to claim 1, **wherein** the bending stiffness of the filter (1) increases, preferably progressively, with increasing bending of the filter (1) out of the resting state (2).

3. Filter (1) according to any one of the previous claims, **wherein** the elastic modulus (E) of the filter (1) in the resting state (2) is higher than 0 MPa and lower than 200 MPa, preferably higher than 0 MPa and lower than 100 MPa.

4. Filter (1) according to any one of the previous claims, **wherein** the filter (1) is bendable in an upwind direction orthogonal to the filter plane and in an opposite downwind direction orthogonal to the filter plane.

5. Filter (1) according to any one of the previous claims, **wherein** the filter (1) has a maximum bending angle α(max) before break of 70° or less, preferably of 50° or less, more preferably of 40° or less.

6. Filter (1) according to any one of the previous claims, **wherein** the filter (1) further comprises two or more circumferential rim plates (51, 52, 53, 54) including a first lateral rim plate (51) and a second lateral rim plate (52) each extending on opposite sides of the filter element (13) from the rear end (12) to the front end (11), wherein preferably each circumferential rim plate (51, 52, 53, 54) is made of polyester.

7. Filter (1) according to any one of the previous claims, **wherein** the filter (1) is essentially non-stretchable in longitudinal direction and/or essentially incompressible in longitudinal direction.

8. Filter (1) according to any one of the previous claims, **wherein** the filter element (13) is made of a pleated material, preferably comprising a plurality of pleat edges each extending essentially orthogonally to the longitudinal direction.

9. Filter assembly (6) comprising a filter (1) according to any one of the previous claims and a filter housing (7) defining:
a. an insertion opening (71) through which the filter (1) in the insertion state (3) can be inserted into the filter housing (7) along a non-linear insertion path (8); and
b. a housing cavity (72) for receiving and holding the filter (1) in the resting state (2).

10. Filter assembly (6) according to claim 9, **wherein** the housing cavity (72) is configured to receive and hold the filter (1) frictionally and/or in a form-fit fashion.

11. Filter assembly (6) according to any one of claims 9-10, **wherein** when the filter (1) in the resting state (2) is arranged in the filter cavity (72), translatory displacement of the filter (1) with respect to the filter housing (7) in any direction parallel to the filter plane is essentially blocked.

12. Filter assembly (6) according to any one of claims 9-11, **wherein** when the filter (1) in the resting state (2) is arranged in the filter cavity (72), the insertion opening (71) is arranged essentially parallel to the filter plane.

13. Filter assembly (6) according to any one of claims 9-12, **wherein** the insertion opening (71) has a maximum length in longitudinal direction of less than 70%, preferably from 5% to 50%, more preferably from 10% to 40%, even more preferably from 15% to 30%, with respect to a length of the filter (1) in longitudinal direction in the resting state (2).

14. Filter assembly (6) according to any one of claims 9-13, **wherein** when the filter (1) in the resting state (2) is arranged in the filter cavity, a tensile force of at least 0.1 N, preferably at least 0.3 N, more preferably at least 0.5 N, is required to retract the filter (1) from the filter housing (7) through the insertion opening (71).

15. Filter assembly (6) according to any one of claims 9-14, **further comprising** a glide guide structure for guiding insertion of the filter (1) into the filter housing (7).
